# EUROPEAN PATENT SPECIFICATION

(11) **EP 2 404 977 B1**
(45) Date of publication and mention of the grant of the patent: **11.05.2016**
(21) Application number: 09840999.8
(22) Date of filing: 06.03.2009
(51) Int. Cl.: C09K 11/78, C09K 11/77

(54) **PREPARATION OF LUMINESCENT OXIDE MATERIALS ACTIVATED BY TRIVALENT THULIUM**
HERSTELLUNG VON LEUCHTSTOFFEN DES OXIDTYPS DIE DURCH DREIWERTIGES THULIUM AKTIVIERTE WERDEN
PRÉPARATIONS DES SUBSTANCES LUMINESCENTES À BASE D'OXYDES ACTIVÉES AU THULIUM TRIVALENT

(43) Date of publication of application: 11.01.2012
(73) Proprietor: Ocean's King Lighting Science&Technology Co., Ltd., Guangdong 518052 (CN)
(72) Inventor: ZHOU, Mingjie, Shenzhen Guangdong 518052 (CN); MA, Wenbo, Shenzhen Guangdong 518052 (CN); SHI, Zhaopu, Shenzhen Guangdong 518052 (CN)
(74) Representative: Asensio, Raffaella Consuelo
(86) International application number: PCT/CN2009/070666
(87) International publication number: WO 2010/099665

(56) References cited:
- JP-A- 2003 027 055
- JP-A- 2003 027 055
- JP-A- 2004 327 398
- JP-A- 2004 327 398
- JP-A- 2006 249 454
- OLIVIA A. GRAEVE ET AL: "Synthesis and Characterization of Luminescent Yttrium Oxide Doped with Tm and Yb", JOURNAL OF THE AMERICAN CERAMIC SOCIETY, vol. 89, no. 3, 23 January 2006 (2006-01-23), pages 926-931, XP55032459, ISSN: 0002-7820, DOI: 10.1111/j.1551-2916.2006.00845.x
- DANIELE GOZZI ET AL: "Lanthanide-Doped Scandia and Yttria Cathodoluminescent Films: A Comparative Study", CHEMISTRY OF MATERIALS, vol. 20, no. 17, 6 August 2008 (2008-08-06), pages 5666-5674, XP55032460, ISSN: 0897-4756, DOI: 10.1021/cm8014176
- BAI Y ET AL: "Enhanced white light emission in Er/Tm/Yb/Li codoped Y2O3 nanocrystals", OPTICS COMMUNICATIONS, NORTH-HOLLAND PUBLISHING CO. AMSTERDAM, NL, vol. 282, no. 9, 27 January 2009 (2009-01-27), pages 1922-1924, XP026013895, ISSN: 0030-4018, DOI: 10.1016/J.OPTCOM.2009.01.013 [retrieved on 2009-01-27]
- M K DEVARAJU ET AL: "Solvothermal synthesis and characterization of blue, green and red emitting Y 2 O 3 :Ln 3+ (Ln 3+ = Tm 3+ , Tb 3+ and Eu 3+ ) nanocrystals", IOP CONFERENCE SERIES: MATERIALS SCIENCE AND ENGINEERING, vol. 1, 1 February 2009 (2009-02-01), page 012011, XP55032536, ISSN: 1757-8981, DOI: 10.1088/1757-8981/1/1/012011
- MUN ET AL: "Growth and characterization of Tm-doped Y2O3 single crystals", OPTICAL MATERIALS, ELSEVIER SCIENCE PUBLISHERS B.V. AMSTERDAM, NL, vol. 29, no. 11, 19 May 2007 (2007-05-19), pages 1390-1393, XP022086014, ISSN: 0925-3467, DOI: 10.1016/J.OPTMAT.2006.03.042
- JANAÍNA GOMES ET AL: "Nanocrystalline RE2O3:Tm3+ (RE: Gd3+, Y3+) Blue Phosphors Synthesized via the Combustion Method", JOURNAL OF FLUORESCENCE, KLUWER ACADEMIC PUBLISHERS-PLENUM PUBLISHERS, NE, vol. 16, no. 3, 12 May 2006 (2006-05-12), pages 411-421, XP019400557, ISSN: 1573-4994, DOI: 10.1007/S10895-006-0090-Z
- JUN YEOL CHO ET AL: "The Effect of Annealing Temperature on the CL Properties of Sol-Gel Derived Y[sub 2]O[sub 3]:Re (Re=Eu[sup 3+],Tb[sup 3+],Tm[sup 3+]) Phosphors", JOURNAL OF THE ELECTROCHEMICAL SOCIETY, vol. 154, no. 9, 1 January 2007 (2007-01-01), pages J272-J277, XP55032504, ISSN: 0013-4651, DOI: 10.1149/1.2754071
- U. RAMBABU ET AL: "Fluorescence spectra of Tm3+-doped rare earth oxychloride powder phosphors", MATERIALS CHEMISTRY AND PHYSICS, vol. 43, no. 2, 1 February 1996 (1996-02-01), pages 195-198, XP55032505, ISSN: 0254-0584, DOI: 10.1016/0254-0584(95)01616-3
- Chen Pei-Lin: "Grain Boundary Mobility in Y2O3: Defect Mechanism and Dopant Effects", Journal of the American Ceramic Society, 1 July 1996 (1996-07-01), pages 1801-1809, XP55032530, Weinheim Retrieved from the Internet: URL:http://onlinelibrary.wiley.com/store/1 0.1111/j.1151-2916.1996.tb07998.x/asset/j. 1151-2916.1996.tb07998.x.pdf?v=1&t=h4jm2yh o&s=95a7b621ccd59b6eafbf4e61a350007a85af90 41 [retrieved on 2012-07-12]
- T. CHANELIÈRE ET AL: "Tm3+:Y2O3 investigated for a quantum light storage application", PHYSICAL REVIEW B, vol. 77, no. 24, 1 June 2008 (2008-06-01), XP55032540, ISSN: 1098-0121, DOI: 10.1103/PhysRevB.77.245127
- CHEN G Y ET AL: "ULTRAVIOLET UPCONVERSION FLUORESCENCE IN RARE-EARTH-ION-DOPED Y2O3 INDUCED BY INFRARED DIODE LASER EXCITATION", OPTICS LETTERS, OSA, OPTICAL SOCIETY OF AMERICA, WASHINGTON, DC, US, vol. 32, no. 1, 1 January 2007 (2007-01-01), pages 87-89, XP001503432, ISSN: 0146-9592, DOI: 10.1364/OL.32.000087
- GRAEVE, O. A.: 'Synthesis and Characterization of Luminescent Yttrium Oxide Doped with Tm and Yb' JOURNAL OF THE AMERICAN CERAMIC SOCIETY vol. 89, no. 3, 2006, pages 926 - 931
- GOZZI, D. LANTHANIDE-DOPED SCANDIA AND YTTRIA CATHODOLUMINESCENT FILMS: A, COMPARATIVE STUDY CHEMISTRY OF MATERIALS vol. 20, no. 17, 2008, pages 5666 - 5674

## Description

### FIELD OF THE INVENTION

The present invention relates the preparations, of yttrium oxide luminescent materials activated by trivalent thulium.

### BACKGROUND OF THE INVENTION

In the 1960s, Ken Shoulder put forward a hypothesis of an electron beam micro device on the basis of field emission cathode assay (FEAs). Accordingly, the researches on the design and manufacture of panel displays and light source devices utilizing FEAs have aroused people's great interest. The operating principle of such kind of new-type field emission device is similar to that of the traditional cathode-ray tube (CRT), which achieves imaging or lighting applications through the bombardment of the electron beam on three-colored fluorescent powder of red, green and blue. Such kind of field emission device has potential advantages in luminosity, visual angle, response time, operating temperature range and energy consumption and so on. But, the blue-light issue is always one of the important factors that restrict the development of such device. Therefore, the preparation of blue light emitting material with high luminosity, high efficiency, high color purity and long service life is one of the important research subjects in present field. At present, the blue-light luminescent material applied in the field emission device is generally zinc sulfide activated by silver, one kind of traditional fluorescent powder used by CRT, which possesses extremely high efficiency when activated by an electron beam. However, such kind of luminescent material has one great drawback of strong saturability. The luminous efficiency of this luminescent material reduces rapidly with the increase of the power of the electron beam. At the same time, this kind of sulfide luminescent material easily decomposes when bombarded by a large electron beam and gives off the elementary sulfur which poisons the cathode electron emitter and shortens the service life of the field emission device. For this reason, the zinc sulfide activated by silver that emits blue light is not suitable for the application in the field emission device, and the search of a corresponding substituted material becomes very necessary. In 2007, one kind of nitride material A1N: Eu²⁺ emitting blue light is put forward by N. Hirosaki et al and used in the field emission device. Such kind of material possesses a good saturation characteristic and stable service life. Nevertheless, the preparation conditions for this kind of material are very rigorous, i.e. technological conditions such as a high temperature above 2000°C, oxygen-free environment and high pressure are required.

### SUMMARY OF THE INVENTION

The objective of the present invention is a preparation method ,

JP 2003 027055 A has disclosed a hydrothermal treatment using Y₂O₃ and TmCl₃ to form (Y_{0.99}Tm_{0.01})₂O₃. JP 2004 327398 A has disclosed a compound of Y₂O₃Tmₓ, wherein, X is 0.005-0.5, especially X=0.009 and X=0_{.}012 for manufacturing the member for an image display device. OLIVIA has disclosed a luminescent yttrium oxide doped with Tm Y_{1.98}Tm_{0.02}O₃ ("Synthesis and Characterization of Luminescent Yttrium Oxide Doped with Tm and Yb", Journal of the American Ceramic Society, Vol. 89. no.3, January 2006, pages 926-931). Daniele has disclosed a cathodoluminescent film of Y₂O₃:Tmₓ, wherein the films were grown on quartz optical polished substrates heated at 800 °C by EB-PVD codeposition ("Lantlaanide-Doped Scandia and Yttria Cathodoluminescent Films: A comparative study", Chemistry of Materials, Vol. 20, no.17, August 6, 2008, pages 5666-5674). Bai has disclosed a prepared by sol-gel process for Enhanced white light emission in Er/Tm/Yb/Li codoped Y₂O₃ nanocrystals ("Enhanced white Light Emission in Er/Tm/Yb/Li codoped Y2O3 nanocrystals", Optics Communications, North-Holland Publishing Co. Amsterdam, NL, Vol.282, no 9, May 1, 2009, pages 1922-1924). Devaraju has disclosed Y₂O₃ nanocrystals doped with lanthanides (Ln3+ =Tm³⁺, Tb³⁺ and Eu³⁺⁾ were prepared via solvothermal refluxing calcination method (Solvothemal Synthesis and Characterization of blue, green and red emitting Y₂O₃: Ln3 (Ln3+=Tm 3+, Tb 3+ and Eu3+) nanoctystals", IOP Conference Series: Material Science and Engineering, Vol.1, February 1, 2009, pages 012011).

However, the compound obtained by above prior art can not be activated by trivalent thulium with high stability, color purity and luminous efficiency. as claimed in claim 1 of the yttrium oxide luminescent materials activated by trivalent thulium, which process requires simple preparation conditions and can be implemented in various ways

The oxide luminescent materials activated by trivalent thulium prepared with the method as claimed in claim 1 has the characteristics of good stability, high color purity, and higher low voltage cathode-ray luminous efficiency and so on. Moreover, the technological conditions of the preparation method are simple and the preparation method is diversiform.

### BRIEF DESCRIPTION OF THE DRAWINGS

The present invention will be further described with reference to the accompanying drawings and embodiments in the following. In the Figures:

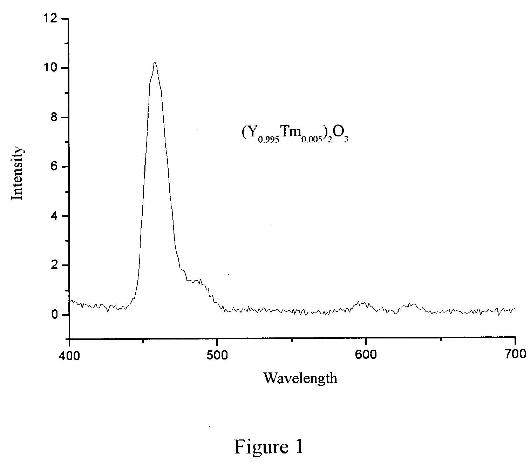

Figure 1 is the cathodoluminescence spectrum diagram of the embodiment 1 in the present invention.

The test condition for the cathodoluminescence spectrum diagram is as follows: the excitation voltage is 5 kV and the beam current is 8 µA.

The detailed description of the process as claimed in claim 1 is reported in the following example 1, whereas the remaining examples are only reference example, therefore they do not make part of the invention.

### Example 1: (Y_{0.995}Tm_{0.005})₂O₃ prepared by Sol-Gel method

0.995 mmol Y₂O₃ and 0.005 mmol Tm₂O₃ are dissolved in 1 ml nitric acid and 2 ml deionized water in a vessel at room temperature. 30ml mixed solution of ethanol and water with a volume ratio of 3:1 is further added after cooling and 0.84g citric acid is added under stirring condition. The resultant mixtures were stirred for 2 h and heated at 80 °C in a water bath until homogeneous gels formed.. After being dried in an oven at 150°C for 6h, a xerogel is obtained and ground into powder. Afterwards the powder is placed in a high temperature furnace, in which the temperature is risen to 900°C at a heating rate of 300°C/h. The powder is sintered for 4 h at such temperature so as to obtain blue emission fluorescent powder (Y_{0.995}Tm_{0.005})₂O₃ with uniform particle size. Under the low-voltage cathode-ray excitation, the blue emission fluorescent powder (Y_{0.995}Tm_{0.005})₂O₃ emits blue light with a half-wave width less than 20 nm as shown in Figure 1 and good color purity.

### Reference example 2: (Y_{0.99}Tm_{0.01})₂O₃ prepared by Sol-Gel method

0.99 mmol Y₂O₃ and 0.01 mmol Tm₂O₃ are dissolved in 1 ml nitric acid and 2 ml deionized water in a vessel at room temperature. 30ml mixed solution of ethanol and water with a volume ratio of 2:1 is further added after cooling and 0.90g citric acid is added under stirring condition. The resultant mixtures were stirred for 6 h and heated at 70 °C in a water bath until homogeneous gels formed. After being dried in an oven at 120°C for 12 h, a xerogel is obtained and ground into powder. Afterwards the powder is placed in a high temperature furnace, in which the temperature is risen to 700°C at a heating rate of 60°C/h. The powder is sintered for 8 h at such temperature so as to obtain blue emission fluorescent powder (Y_{0.99}Tm_{0.01})₂O₃with uniform particle size. Under the low-voltage cathode-ray excitation, the blue emission fluorescent powder (Y_{0.99}Tm_{0.01})₂O₃ emits blue light with a half-wave width less than 20 nm and good color purity.

### Reference example 3: (Y_{0.95}Tm_{0.05})₂O₃ prepared by Sol-Gel method

0.95 mmol Y₂O₃ and 0.05 mmol Tm₂O₃ are dissolved in 1 ml nitric acid and 2 ml deionized water in a vessel at room temperature. 30ml mixed solution of ethanol and water with a volume ratio of 5:1 is further added after cooling and 1.26g citric acid is added under stirring condition. The resultant mixtures were stirred for 4 h and heated at 75 °C in a water bath until homogeneous gels formed. After being dried in an oven at 140°C for 8 h, a xerogel is obtained and ground into powder. Afterwards the powder is placed in a high temperature furnace, in which the temperature is risen to 1350°C at a heating rate of 500°C/h. The powder is sintered for 2h at such temperature so as to obtain blue emission fluorescent powder (Y_{0.95}Tm_{0.05})₂O₃with uniform particle size. Under the low-voltage cathode-ray excitation, the blue emission fluorescent powder (Y_{0.95}Tm_{0.05})₂O₃ emits blue light with a half-wave width less than 20 nm and good color purity.

### Reference example: (Y_{0.99}Tm_{0.01})₂O₃ prepared by Sol-Gel method

0.99 mmol Y₂O₃ and 0.01 mmol Tm₂O₃ are dissolved in 1 ml hydrochloric acid and 2 ml deionized water in a vessel at room temperature. 30ml mixed solution of ethanol and water with a volume ratio of 6:1 is further added after cooling and 1.68g citric acid is added under stirring condition. The resultant mixtures were stirred for 3 h and heated at 85 °C in a water bath until homogeneous gels formed. After being dried in an oven at 160°C for 4h, a xerogel is obtained and ground into powder.Afterwards the powder is placed in a high temperature furnace, in which the temperature is risen to 1200°C at a heating rate of 400°C/h. The powder is sintered for 3 h at such temperature so as to obtain blue emission fluorescent powder (Y_{0.99}Tm_{0.01})₂O₃with uniform particle size. Under the low-voltage cathode-ray excitation, the blue emission fluorescent powder (Y_{0.99}Tm_{0.01})₂O₃ emits blue light with a half-wave width less than 20 nm and good color purity.

### Reference example 5: (Y_{0.99}Tm_{0.01})₂O₃ prepared by Sol-Gel method

1.98 mmol Y(NO₃)₃ and 0.02 mmol Tm(NO₃)₃ are dissolved in 2 ml deionized water in a vessel at room temperature. 30ml mixed solution of ethanol and water with a volume ratio of 4:1 is further added after cooling and 1.05g citric acid is added under stirring condition. The resultant mixtures were stirred for 5 h and heated at 100 °C in a water bath until homogeneous gels formed. After being dried in an oven at 180°C for 7h, a xerogel is obtained and ground into powder.Afterwards the powder is placed in a high temperature furnace, in which the temperature is risen to 800°C at a heating rate of 200°C/h. The powder is sintered for 5 h at such temperature so as to obtain blue emission fluorescent powder (Y_{0.99}Tm_{0.01})₂O₃ with uniform particle size. Under the low-voltage cathode-ray excitation,the blue emission fluorescent powder (Y_{0.99}Tm_{0.01})₂O₃ emits blue light with a half-wave width less than 20 nm and good color purity.

### Reference example 6: (Y₀.₉₉Tm_{0.01})₂O₃ prepared by Sol-Gel method

1.98 mmol YCl₃ and 0.02 mmol TmCl₃ are dissolved in 2 ml deionized water in a vessel at room temperature. The remaining steps are the same as those in example 1 and then blue emission fluorescent powder (Y₀.₉₉Tm_{0.01})₂O₃ with uniform particle size is obtained. Under the low-voltage cathode-ray excitation, the blue emission fluorescent powder (Y_{0.99}Tm_{0.01})₂O₃ emits blue light with a half-wave width less than 20 nm and good color purity.

### Reference example 7: (Y_{0.79}Gd_{0.2}Tm_{0.01})₂O₃ prepared by Sol-Gel method

0.79mmol Y₂O₃, 0.2mmol Gd₂O₃ and 0.01 mmol Tm₂O₃ are dissolved in 1 ml nitric acid and 2 ml deionized water in a vessel at room temperature. The remaining steps are the same as those in example 1 and blue emission fluorescent powder (Y_{0.79}Gd_{0.2}Tm_{0.01})₂O₃ with uniform particle size is obtained. Under the low-voltage cathode-ray excitation, the blue emission fluorescent powder (Y_{0.79}Gd_{0.2}Tm_{0.01})₂O₃ emits blue light with a half-wave width less than 20 nm and good color purity.

### Reference example 8: (Y_{0.29}Gd_{0.7}Tm_{0.01})₂O₃ prepared by Sol-Gel method

0.29mmol Y₂O₃, 0.7mmol Gd₂O₃ and 0.01mmol Tm₂O₃ are dissolved in 1 ml nitric acid and 2 ml deionized water in a vessel at room temperature. The remaining steps are the same as those in example 1 and blue emission fluorescent powder (Y_{0.29}Gd_{0.7}Tm_{0.01})₂O₃ with uniform particle size is obtained. Under the low-voltage cathode-ray excitation, the blue emission fluorescent powder (Y_{0.29}Gd_{0.7}Tm_{0.01})₂O₃ emits blue light with a half-wave width less than 20 nm and good color purity.

### Reference example 9: (Gd_{0.99}Tm_{0.01})₂O₃ prepared by Sol-Gel method

0.99mmol Gd₂O₃ and 0.01 mmol Tm₂O₃ are dissolved in 1 ml nitric acid and 2 ml deionized water in a vessel at room temperature. The remaining steps are the same as those in example 1 and blue emission fluorescent powder (Gd_{0.99}Tm_{0.01})₂O₃ with uniform particle size is obtained. Under the low-voltage cathode-ray excitation, the blue emission fluorescent powder (Gd_{0.99}Tm_{0.01})₂O₃ emits blue light with a half-wave width less than 20 nm and good color purity.

### Reference example 10: (La_{0.999}Tm_{0.001})₂O₃ prepared by Sol-Gel method

0.999mmol La₂O₃ and 0.001mmol Tm₂O₃ are dissolved in 1 ml nitric acid and 2 ml deionized water in a vessel at room temperature. The remaining steps are the same as those in example 1 and blue emission fluorescent powder (La_{0.999}Tm_{0.001})₂O₃ with uniform particle size is obtained. Under the low-voltage cathode-ray excitation, the blue emission fluorescent powder (La_{0.999}Tm_{0.001})₂O₃ emits blue light with a half-wave width less than 20 nm and good color purity.

### Reference example 11: (Lu_{0.995}Tm_{0.005})₂O₃ prepared by Sol-Gel method

0.995mmol Lu₂(COO)₃ and 0.005mmol Tm₂(COO)₃ are dissolved in 1 ml nitric acid and 2 ml deionized water in a vessel at room temperature. The remaining steps are the same as those in example 1 and blue emission fluorescent powder (Lu_{0.995}Tm_{0.005})₂O₃ with uniform particle size is obtained. Under the low-voltage cathode-ray excitation, the blue emission fluorescent powder (Lu_{0.995}Tm_{0.005})₂O₃ emits blue light with a half-wave width less than 20 nm and good color purity.

### Reference example 12: (Sc_{0.995}Tm_{0.005})₂O₃ prepared by Sol-Gel method

0.995mmol Sc₂(CO₃)₃ and 0.005mmol Tm₂(CO₃)₃ are dissolved in 1 ml nitric acid and 2 ml deionized water in a vessel at room temperature. The remaining steps are the same as those in example 1 and blue emission fluorescent powder (Sc_{0.995}Tm_{0.005})₂O₃ is with uniform particle size is obtained. Under the low-voltage cathode-ray excitation, the blue emission fluorescent powder (Sc_{0.995}Tm_{0.005})₂O₃ emits blue light with a half-wave width less than 20 nm and good color purity.

### Reference Example 13: (Y_{0.995}Tm_{0.005})₂O₃ prepared by high temperature solid phase method

0.995 mmol Y₂O₃ and 0.005 mmol Tm₂O₃ are placed in an agate mortar and ground to be uniformly mixed at room temperature. Then the powder is transferred to a corundum crucible and placed in a high temperature box-type furnace and then sintered at 1350°C for 6h. The sintering product is then placed in a mortar and ground to be uniform after cooling to room temperature. In order to eliminate the surface defect of the fluorescent powder and improve its luminous efficiency, the product is further annealed at 900°C and blue emission fluorescent powder (Y_{0.995}Tm_{0.005})₂O₃ is obtained therewith. When activated by low-voltage cathode-ray, the blue emission fluorescent powder (Y_{0.995}Tm_{0.005})₂O₃ emits blue light with high color purity and a half-wave width of less than 20 nm.

### Reference example 14: (Y_{0.99}Tm_{0.01})₂O₃ prepared by high temperature solid phase method

0.99 mmol Y₂O₃ and 0.01 mmol Tm₂O₃ are placed in an agate mortar and ground to be uniformly mixed at room temperature. Then the powder is transferred to a corundum crucible and placed in a high temperature box-type furnace and then sintered at 900°C for 10h. The sintering product is then placed in a mortar and ground to be uniform after cooling to room temperature. In order to eliminate the surface defect of the fluorescent powder and improve its luminous efficiency, the product is further annealed at 800°C and blue emission fluorescent powder (Y_{0.99}Tm_{0.01})₂O₃ is obtained therewith. When activated by low-voltage cathode-ray, the blue emission fluorescent powder (Y_{0.99}Tm_{0.01})₂O₃ emits blue light with high color purity and a half-wave width of less than 20 nm.

### Reference example 15: (Y_{0.97}Tm_{0.03})₂O₃ prepared by high temperature solid phase method

0.97 mmol Y₂O₃ and 0.03 mmol Tm₂O₃ are placed in an agate mortar and ground to be uniformly mixed at room temperature. Then the powder is transferred to a corundum crucible and placed in a high temperature box-type furnace and then sintered at 1500°C for 4h. The sintering product is then placed in a mortar and ground to be uniform after cooling to room temperature. In order to eliminate the surface defect of the fluorescent powder and improve its luminous efficiency, the product is further annealed at 900°C and blue emission fluorescent powder (Y_{0.97}Tm_{0.03})₂O₃ is obtained therewith. When activated by low-voltage cathode-ray, the blue emission fluorescent powder (Y_{0.97}Tm_{0.03})₂O₃emits blue light with high color purity and a half-wave width of less than 20 nm.

### Reference example 16: (Y_{0.95}Tm_{0.05})₂O₃ prepared by high temperature solid phase method

0.95 mmol Y₂O₃ and 0.05 mmol Tm₂O₃ are placed in an agate mortar and ground to be uniformly mixed at room temperature. Then the powder is transferred to a corundum crucible and placed in a high temperature box-type furnace and then sintered at 1200°C for 8h. The sintering product is then placed in a mortar and ground to be uniform after cooling to room temperature. In order to eliminate the surface defect of the fluorescent powder and improve its luminous efficiency, the product is further annealed at 950°C and blue emission fluorescent powder (Y_{0.95}Tm_{0.05})₂O₃ is obtained therewith. When activated by low-voltage cathode-ray, the blue emission fluorescent powder (Y_{0.95}Tm_{0.05})₂O₃ emits blue light with high color purity and a half-wave width of less than 20 nm.

### Reference Example 17: (Y_{0.99}Tm_{0.01})₂O₃ prepared by high temperature solid phase method

1.98mmol Y(NO₃)₃ and 0.02mmol Tm(NO₃)₃ are placed in an agate mortar and ground to be uniformly mixed at room temperature. Then the powder is transferred to a corundum crucible and placed in a high temperature box-type furnace and then sintered at 1400°C for 5h. The sintering product is then placed in a mortar and ground to be uniform after cooling to room temperature. In order to eliminate the surface defect of the fluorescent powder and improve its luminous efficiency, the product is further annealed at 1000°C and blue emission fluorescent powder (Y_{0.99}Tm_{0.01})₂O₃ is obtained therewith. When activated by low-voltage cathode-ray, the blue emission fluorescent powder (Y_{0.99}Tm_{0.01})₂O₃ emits blue light with high color purity and a half-wave width of less than 20 nm.

### Reference example 18: (Y_{0.99}Tm_{0.01})₂O₃ prepared by high temperature solid phase method

1.98mmol YCl₃ and 0.02mmol TmCl₃ are placed in an agate mortar and ground to be uniformly mixed at room temperature. Then the powder is transferred to a corundum crucible and placed in a high temperature box-type furnace and then sintered at 1300°C for 5h. The sintering product is then placed in a mortar and ground to be uniform after cooling to room temperature. In order to eliminate the surface defect of the fluorescent powder and improve its luminous efficiency, the product is further annealed at 850°C and blue emission fluorescent powder (Y_{0.99}Tm_{0.01})₂O₃ is obtained therewith. When activated by low-voltage cathode-ray, the blue emission fluorescent powder (Y_{0.99}Tm_{0.01})₂O₃ emits blue light with high color purity and a half-wave width of less than 20 nm.

### Reference example 19: (Y_{0.79}Gd_{0.2}Tm_{0.01})₂O₃ prepared by high temperature solid phase method

0.79mmol Y₂O₃, 0.2mmol Gd₂O₃ and 0.01 mmol Tm₂O₃ are placed in an agate mortar and ground to be uniformly mixed at room temperature. The remaining steps are the same as those in example 13 and blue emission fluorescent powder (Y_{0.79}Gd_{0.2}Tm_{0.01})₂O₃ is obtained therewith. When activated by low-voltage cathode-ray, the blue emission fluorescent powder (Y_{0.79}Gd_{0.2}Tm_{0.01})₂O₃ emits blue light with high color purity and a half-wave width of less than 20 nm.

### Reference example 20: (Y_{0.49}Gd_{0.5}Tm_{0.01})₂O₃ prepared by high temperature solid phase method

0.49mmol Y₂O₃, 0.5mmol Gd₂O₃ and 0.01mmol Tm₂(COO)₃ are placed in an agate mortar and ground to be uniformly mixed at room temperature. The remaining steps are the same as those in example 13 and blue emission fluorescent powder (Y_{0.49}Gd_{0.5}Tm_{0.01})₂O₃ is obtained therewith. When activated by low-voltage cathode-ray, the blue emission fluorescent powder (Y_{0.49}Gd_{0.5}Tm_{0.01})₂O₃ emits blue light with high color purity and a half-wave width of less than 20 nm.

### Reference example 21: (Gd_{0.99}Tm_{0.01})₂O₃ prepared by high temperature solid phase method

1.98mmol Gd(NO₃)₃ and 0.01mmol Tm₂O₃ are placed in an agate mortar and ground to be uniformly mixed at room temperature. The remaining steps are the same as those in example 13 and blue emission fluorescent powder (Gd_{0.99}Tm_{0.01})₂O₃ is obtained therewith. When activated by low-voltage cathode-ray, the blue emission fluorescent powder (Gd_{0.99}Tm_{0.01})₂O₃ emits blue light with high color purity and a half-wave width of less than 20 nm.

### Reference example 22: (La_{0.99}Tm_{0.01})₂O₃ prepared by high temperature solid phase method

0.99mmol La₂(COO)₃ and 0.01mmol Tm₂O₃ are placed in an agate mortar and ground to be uniformly mixed at room temperature. The remaining steps are the same as those in example 13 and blue emission fluorescent powder (La_{0.99}Tm_{0.01})₂O₃ is obtained therewith. When activated by low-voltage cathode-ray, the blue emission fluorescent powder (La_{0.99}Tm_{0.01})₂O₃ emits blue light with high color purity and a half-wave width of less than 20 nm.

### Reference example 23: (Lu_{0.995}Tm_{0.05})₂O₃ prepared by high temperature solid phase method

0.995mmol Lu₂(CO₃)₃ and 0.005mmol Tm₂(CO₃)₃ are placed in an agate mortar and ground to be uniformly mixed at room temperature. The remaining steps are the same as those in example 13 and blue emission fluorescent powder (Lu_{0.995}Tm_{0.005})₂O₃ is obtained therewith. When activated by low-voltage cathode-ray, the blue emission fluorescent powder (Lu_{0.995}Tm_{0.005})₂O₃ emits blue light with high color purity and a half-wave width of less than 20 nm.

### Reference example 24: (Sc_{0.999}Tm_{0.001})₂O₃ prepared by high temperature solid phase method

0.999mmol Sc₂O₃ and 0.001mmol Tm₂O₃ are placed in an agate mortar and ground to be uniformly mixed at room temperature. The remaining steps are the same as those in example 13 and blue emission fluorescent powder (Sc_{0.999}Tm_{0.001})₂O₃ is obtained therewith. When activated by low-voltage cathode-ray, the blue emission fluorescent powder (Sc_{0.999}Tm_{0.001})₂O₃ emits blue light with high color purity and a half-wave width of less than 20 nm.

## Claims

1. A preparation method for oxide luminescent material, activated by trivalent thulium and emitting blue-light, said oxide consisting of (Y_{0.995}Tm_{0.005})₂O₃, **characterized in that** the preparation method consists of the following steps (1)-(5):
(1) dissolving 0.995mmol Y203 and 0.005 mmol Tm203 in 1 ml nitric acid and 2 ml of deionized water;
(2) adding 30ml of a mixed solution of ethanol and water in a volume ratio of 3:1 then adding 0.84 g of citric acid, under stirring,
(3) heating the mixture obtained in the previous step until for 2 hours at 80°C until a homogeneous mixture is obtained,
(4) drying the gel obtained in the previous step in an oven at 150°C for 6 h until a xerogel is obtained,
(5) placing the powder in a high temperature furnace wherein the temperature is raised to 900°C at a heating rate of 300°C/h and sintering the powder for 4 hours at 900°C, thereby obtaining said oxide luminescent material.

## Patentansprüche

1. Herstellungsverfahren von lumineszierendem Oxidmaterial, das durch dreiwertiges Thulium aktiviert wird und blaues Licht emittiert, wobei das Oxid aus (Y_{0,995}Tm_{0,005})₂O₃, besteht, **dadurch gekennzeichnet, dass** das Herstellungsverfahren aus folgenden Schritten (1) bis (5) besteht:
(1) Auflösen von 0,995 mmol Y203 und 0,005 mmol Tm203 in 1 ml Salpetersäure und 2 ml deionisiertem Wasser;
(2) Zusetzen von 30 ml einer gemischten Lösung aus Ethanol und Wasser im Volumenverhältnis von 3:1 und anschließendes Zusetzen von 0,84 g Zitronensäure unter Rühren;
(3) Erhitzen des im vorhergehenden Schritt erhaltenen Gemischs für 2 Stunden auf 80 °C, bis ein homogenes Gemisch entsteht,
(4) Trocknen des im vorhergehenden Schritt erhaltenen Gels in einem Ofen bei 150 °C für 6 Stunden, bis ein Xerogel entsteht,
(5) Einbringen des Pulvers in einen Hochtemperaturofen, wobei die Temperatur bei einer Aufheizrate von 300 °C/h auf 900 °C erhöht wird und Sintern des Pulvers für 4 Stunden bei 900 °C, wodurch das lumineszierende Oxid gewonnen wird.

## Revendications

1. Procédé de préparation pour une substance luminescente d'oxyde, activée par du thulium trivalent et émettant de la lumière bleue, ledit oxyde comprenant du (Y_{0.995}Tm_{0.005})₂O₃, **caractérisé en ce que** le procédé de préparation comprend les étapes suivantes (1) - (5) :
(1) la dissolution de 0,995 mmol de Y203 et 0,005 mmol de Tm203 dans 1 ml d'acide nitrique et 2 ml d'eau dé-ionisée ;
(2) l'ajout de 30 ml d'une solution mélangée d'éthanol et d'eau dans un rapport de volume de 3:1, puis l'ajout de 0,84 g d'acide citrique, sous agitation,
(3) le chauffage du mélange obtenu dans l'étape précédente jusqu'à pendant 2 heures à 80°C jusqu'à ce qu'un mélange homogène soit obtenu,
(4) le séchage du gel obtenu dans l'étape précédente dans une étuve à 150°C pendant 6 heures jusqu'à ce qu'un xérogel soit obtenu,
(5) la disposition de la poudre dans un four à haute température dans lequel la température est augmentée à 900°C à une vitesse de chauffage de 300°C/h et le frittage de la poudre pendant 4 heures à 900°C, en obtenant ainsi ladite substance luminescente d'oxyde.
